# EUROPEAN PATENT APPLICATION

(11) **EP 3 412 405 A1**
(43) Date of publication of application: **12.12.2018**
(21) Application number: 18176027.3
(22) Date of filing: 05.06.2018
(51) Int. Cl.: B23Q 7/10, B23C 3/35

(54) **KEY BLANK DISPENSING SYSTEM**

(30) Priority: 06.06.2017 GB 201708957
(71) Applicant: Iconx Limited, Brighton, East Sussex BN1 1AX (GB)
(72) Inventor: Horsfall, David Anthony, Silsden, Keighley BD20 0EF (GB); Crowther, Polly, Silsden, Keighley BD20 0EF (GB)
(74) Representative: Sales, Robert Reginald

(57) **Abstract**

A key blank dispensing system (10) comprising a magazine (32) for receiving a plurality of key blanks (14, 22) stacked vertically one above each other in a substantially identical alignment to each other. A slot (34) is provided at the lower end in use of the magazine (32) to enable a single key blank (14, 22) to be ejected laterally from the lower end of the stack of key blanks (14, 22). An ejector arrangement (56) is also provided to urge the lowermost key blank (14, 22) laterally from the stack of key blanks (14, 22).

## Description

This invention concerns a key blank dispensing system, and especially such a system for an automatic key cutting machine.

In a number of applications and especially in automatic key cutting machines, it is required to have a key blank dispensing system which enables a key blank to be dispensed when required in a desired orientation. Key blanks for two main types of keys are principally provided in such systems.

A first type of key blank is for producing a cylinder key. Such a blank is generally relatively flat and includes a head with a shank extending therefrom, which shank is cut as required to operate a particular lock. A lateral projection referred to as an "ear" is often provided at the distal end of the shank adjacent the head.

A second type of key blank is for producing a lever key. Such a blank generally includes a head which is usually flat. A shank which is usually cylindrical extends from the head. Spaced from the head a collar of larger diameter is generally provided around the shank, with a blade in the form of a flat projection parallel to the head, on the opposite side of the collar to the head. The blade can be cut as required to operate a particular lock.

A wide range of different sizes and shapes of key blanks are available, and it is desirable for a system to be usable with such a wide range of key blanks.

According to a first aspect of the invention there is provided a key blank dispensing system, the system comprising a magazine for receiving a plurality of key blanks stacked vertically one above each other in a substantially identical alignment to each other, a slot being provided at the lower end in use of the magazine to enable a single key blank to be ejected laterally from the lower end of the stack of key blanks, an ejector arrangement being provided to urge the lowermost key blank laterally from the stack of key blanks.

The ejector arrangement may include an ejector member which is slidably movable to engage with and laterally move the lowermost key blank. The ejector member may be engageable with the head of a key blank, and may include a concave engagement face engageable with the head of a key blank.

The ejector arrangement may include a linkage arrangement with an actuating member which when moved causes the ejector member to move to eject a key blank. The linkage arrangement may be configured such that pushing of the actuating member causes the ejector member to move to eject a key blank.

The ejector arrangement may be spring urged to a position where the ejector arrangement is not ejecting a key blank from the cut magazine.

The actuating member may be located adjacent a lower end of the magazine, such that as an item is brought towards the lower end of the magazine the item may engage with the actuating member to cause a key blank to be ejected. The actuating member may be located immediately beneath the lower end of the magazine.

The magazine may have an internal profile to engage with the head and shank of a key blank to provide a correct alignment thereof. The internal profile of the magazine may be adjustable to receive different sizes and shapes of key blanks. Inserts may be selectively mountable in the magazine to provide different sizes and/or shaped spaces for different key blanks. Formations may be provided to locate the inserts in the magazine.

For use with cylinder key blanks, a space may be provided in the magazine on one side only to receive the ears of key blanks to ensure correct alignment thereof.

For use with lever key blanks, a space may be provided on one side only to receive the blades of key blanks to ensure correct alignment of the key blanks.

Spaced sprung members may be provided engageable on either side of a key blank shank as it is ejected from the magazine to provide a correct alignment of the key blank.

The spaced sprung members may be configured such that the blade of a key blank will pass thereover.

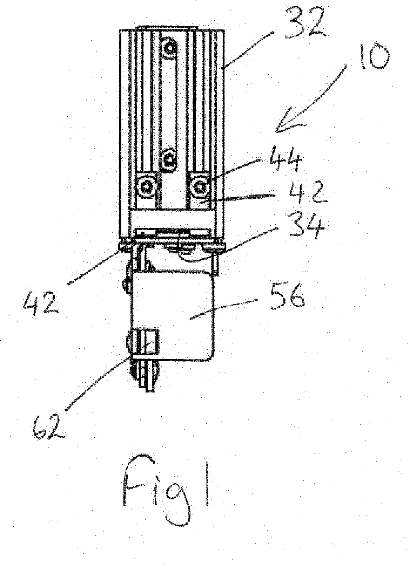

Embodiments of the present invention will now be described by way of example only and with reference to the accompanying drawings, in which:-
Fig. 1 is a diagrammatic front view of part of a first key blank system according to the invention;

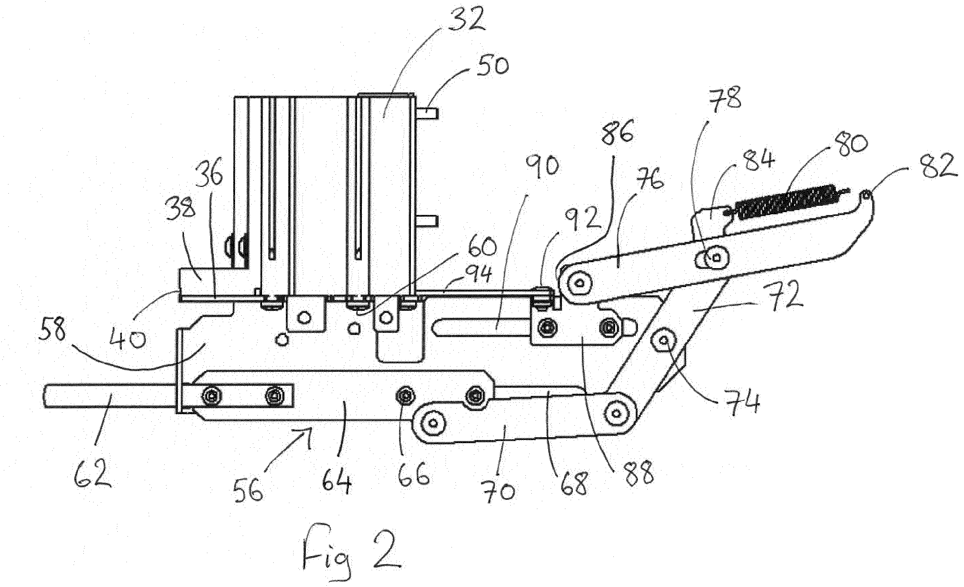

Fig. 2 is a diagrammatic side view of the system of Fig. 1;

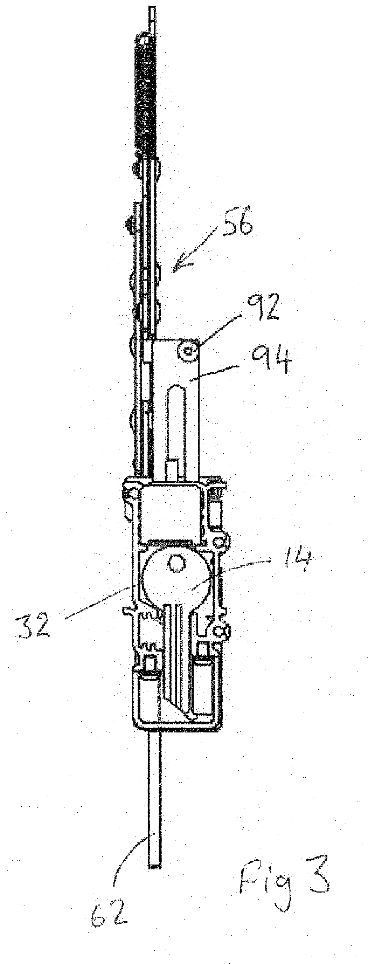

Fig. 3 is a diagrammatic sectional plan view of the system of Fig. 1;
Fig. 4 is a more detailed diagrammatic sectional plan view of part of the system of Fig. 1;
Figs. 5, 6, 7 and 8 are respectively similar views to Figs. 1 to 4 but of a second key blank dispensing system according to the invention;
Fig. 9 is a diagrammatic cross sectional side view through the system of Fig. 5; and
Fig. 10 is a diagrammatic perspective view from above, the rear and one side of the system of Fig. 5, but with some components removed.

The drawings show first and second key blank dispensing systems 10, 12 according to the invention. Such systems 10, 12 could be provided for instance in an automatic key cutting machine, and in such a machine a plurality of such systems 10, 12 may be provided perhaps located adjacent each other, and arranged to each dispense a different key blank.

The first key blank dispensing system 10 is for dispensing a cylinder key blank 14 which has a head 16, and a relatively flat shank 18, with an ear 20 on one side thereof, adjacent the head 16.

The second key blank dispensing system 12 is for a lever key blank 22, with the blank 22 comprising a relatively flat head 24, with a cylindrical shank 26 extending therefrom. Part way along the length of the shank 26 a collar 28 is provided of greater diameter than the rest of the shank 26. Beyond the collar 28 on one side of the shank 26 is provided a blade 30.

The first key blank dispensing system 10 includes a vertically aligned magazine 32 which is profiled to locate a plurality of cylinder key blanks 14, in a stack one above each other, aligned with each other. A slot 34 is provided at the base of the magazine 32 to enable a single key blank 14 to pass laterally therethrough. As can be seen a flat support part 36 extends in front of the slot 34 and has an upstanding wall 38 extending around the edge thereof, with a slot 40 in the front edge of the wall 38 to enable the key blank 14 to pass therethrough. A pair of L-shaped sprung members 42 are mounted to the front of the magazine 32 adjacent the slot 34 each by a respective bolt 44. The sprung members 42 define a space therebetween to guide the shank 18 of a key blank 14 being ejected from the magazine 32.

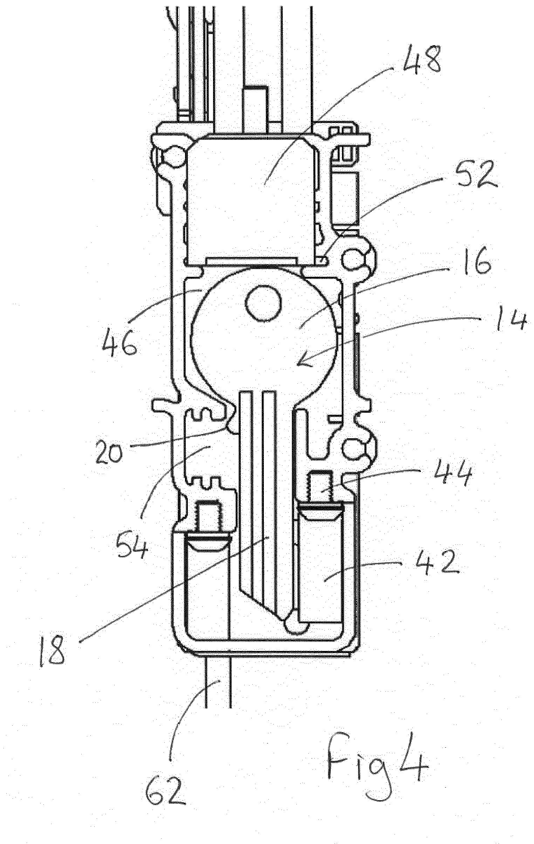

As can be seen for instance in Fig. 4 a part 46 of the internal profile of the magazine 32 is shaped to receive the head 16 of the key blank 14. At the proximal end of the key blank 14 a blanking member 48 is located within the magazine 32. It is to be realised that with some shapes and sizes of key blanks it would not be required to have such a blanking member. As can be seen a pair of facing slots 52 on either side of the interior of the magazine slidingly supportingly receive the blanking member 48. A pair of bolts 50 is provided for fixing the magazine 32 to a machine frame (not shown).

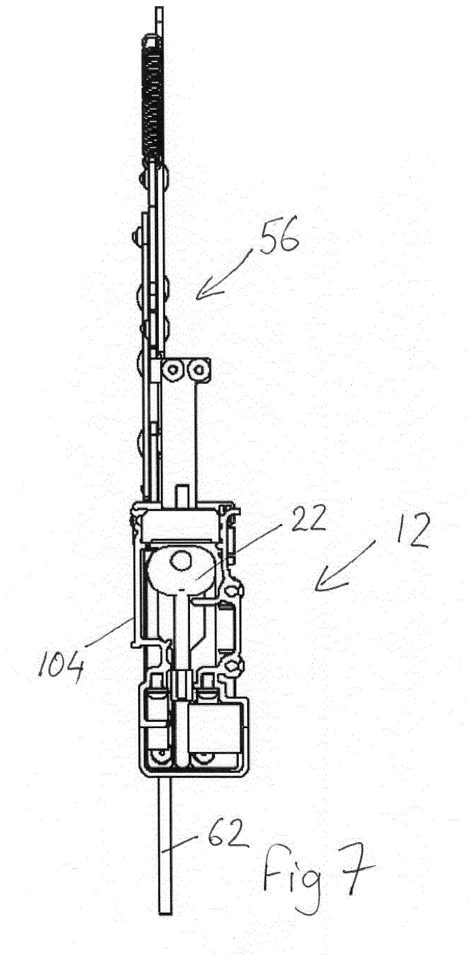

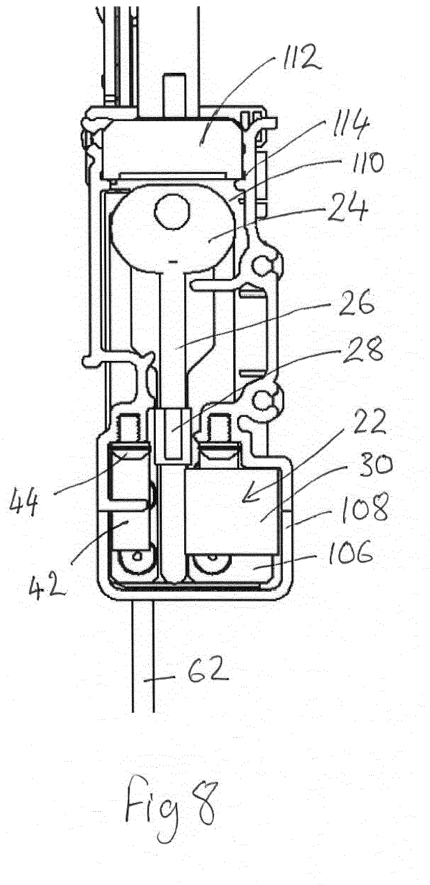

Moving proximally, a recess 54 is provided on one side only of the interior of the magazine 32, which recess 54 can receive the ear 20 of a key blank 14 as shown in Figs. 7 and 8, to ensure the correct alignment of the key blanks 14.

The slot at the base of the magazine 32 extends rearwardly such that one key blank 14 only at a time can be slid forwards, with the sprung members 42 maintaining the key blank 14 in a required alignment.

The system 10 also includes an ejector arrangement 56, mounted principally beneath, and partially behind the magazine 32. The ejector arrangement 56 includes a frame 58 which permits mounting to the magazine 32 by bolts 60. An actuating member in the form of a rod 62 extends laterally outwardly from the remainder of the ejector arrangement 56 and also extends outwardly beneath the slot.

The rod 62 is mounted on a connecting member 64 which is slidably movable laterally relative to the frame 58, with guide members 66 located in a lateral slot 68. A first link member 70 is pivotally mounted to the connecting member 64 at one end, and pivotally connects at the other end to a second link member 72, which second link member 72 is pivotally mounted about a generally central point 74 to a rear part of the frame 58.

A third link member 76 is pivotally mounted about a generally central point 78 to a far end of the second link member 72. A spring 80 extends between a rear end 82 of the third link member 76 and an upper part 84 of the second link member 72, which spring 80 urges the ejector arrangement 56 to the condition shown, with the actuating member rod 62 extending fully forwards from the frame 58.

A forward end 86 of the third link member 76 is pivotally mounted to a carriage 88 which is movable along a slot 90 in the frames. The carriage 88 also mounts by a rivet 92, a rear end of an ejector member 94, which ejector member 94 is slidably movable into the slot 34 to eject a key blank 14 from the stack of key blanks. The front of the ejector member 94 may define a concave engagement face which can engage against the rounded head 16 of a key blank 14.

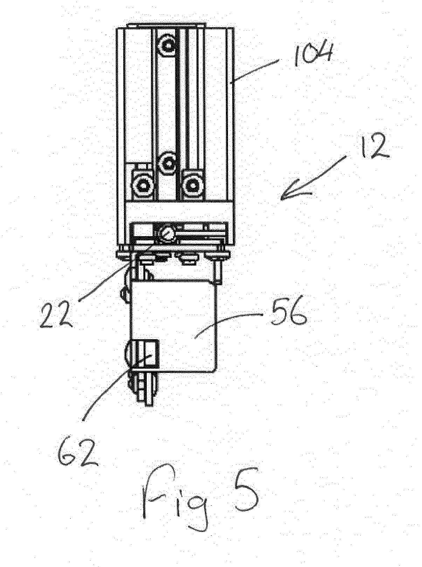

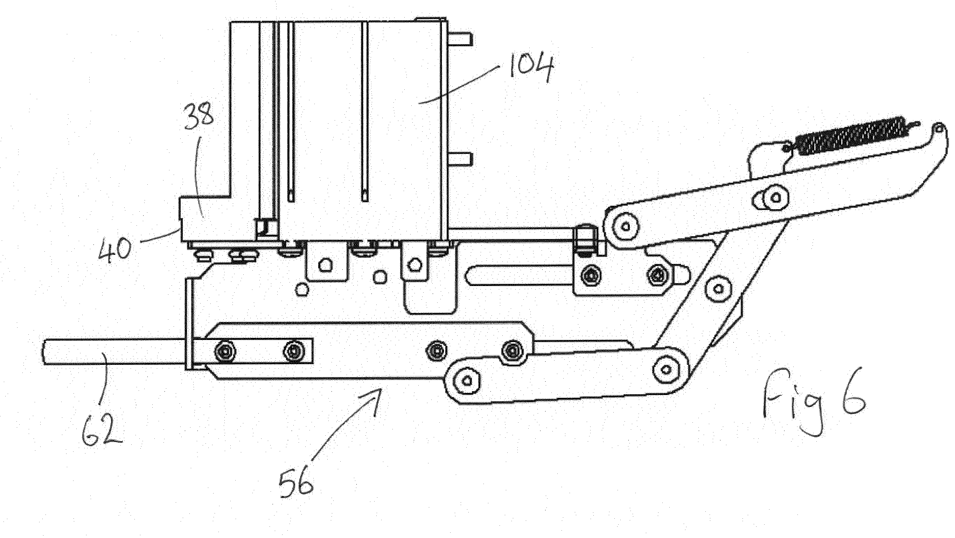

Figs. 5 to 10 show the second key blank display system 12 which has an identical ejector arrangement 56, but a different magazine 104. In this instance the support part 106 extends further forwards, and the lever key blanks 22 will be located in the magazine 104 with the blades 30 extending outwardly from the front of the magazine 104. The wall 108 and the support part 106 are profiled such that the blade 30 can only extend on one side, such that all the blanks 22 will be in the same alignment.

Again a space 110 is defined to receive the head 24 of the key blank 22, and an appropriate size blanking member 112 extends within the magazine 104, and locates in opposed slots 114.

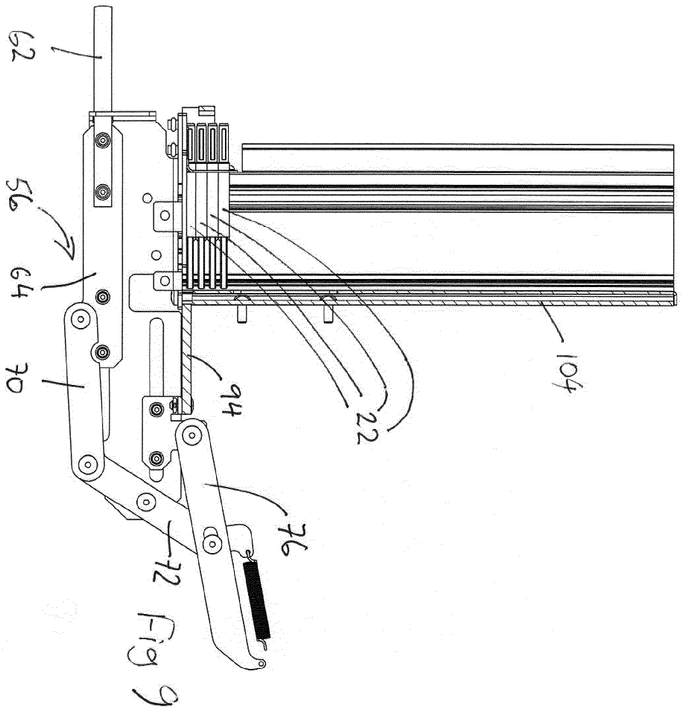

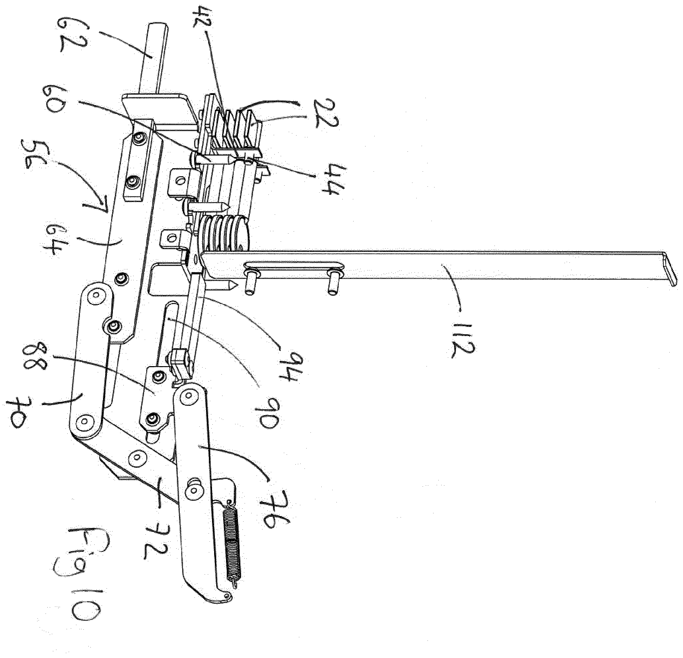

Use of the second system 12 is particularly shown in Figs. 9 and 10, and the first system 10 would operate in a similar manner. In use a stack of lever key blanks 22 are located in the magazine 104 as indicated diagrammatically in the drawings. It is to be realised that the key blanks 22 could extend for substantially the whole height of the magazine 104, but only a few key blanks have been shown for clarity.

When it is required to dispense a key blank 22, the actuator member rod 62 is pushed towards the magazine 104 which via the first, second and third link members 70, 72, 76 causes the ejector member 94 to move forwards urging the lowermost blank 22 only from the stack outwardly. As a key blank 22 is urged forwards, it is guided in position by the sprung members 42 engaging with the shank 18. A receiving member for the key blank 22 could be arranged to engage against the actuating member rod 62, such that a key blank 22 is automatically ejected when a receiving member moves into position in front of the magazine 104.

There are thus described key blank dispensing systems which are usable with a wide range of key blank types, sizes and shapes, but which allow the key blanks to be dispensed when required in a correct alignment. The provision of the actuator member permits automatic operation of the system when an appropriate receptor for the key blanks comes into position.

It is to be realised that a wide range of amendments may be made without departing from the scope of the invention. For instance the magazines may take a wide range of formats. A different ejector arrangement may be provided, perhaps with a different link arrangement. In some instances an ejector arrangement could include some form of linear actuator rather than the linkage arrangement.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A key blank dispensing system, the system comprising a magazine for receiving a plurality of key blanks stacked vertically one above each other in a substantially identical alignment to each other, a slot being provided at the lower end in use of the magazine to enable a single key blank to be ejected laterally from the lower end of the stack of key blanks, an ejector arrangement being provided to urge the lowermost key blank laterally from the stack of key blanks.

2. A dispensing system according to claim 1, in which the ejector arrangement includes an ejector member which is slidably movable to engage with and laterally move the lowermost key blank.

3. A dispensing system according to claim 2, in which the ejector member is engageable with the head of a key blank.

4. A dispensing system according to claim 3, in which the ejector member includes a concave engagement face engageable with the head of a key blank.

5. A dispensing system according to any of claims 2 to 4, in which the ejector arrangement includes a linkage arrangement with an actuating member which when moved causes the ejector member to move to eject a key blank.

6. A dispensing system according to claim 5, in which the linkage arrangement is configured such that pushing of the actuating member causes the ejector member to move to eject a key blank.

7. A dispensing system according to any of the preceding claims, the ejector arrangement is spring urged to a position where the ejector arrangement is not ejecting a key blank from the cut magazine.

8. A dispensing system according to claim 5 or claims 6 or 7 when dependent on claim 5, in which the actuating member is located adjacent a lower end of the magazine, such that as an item is brought towards the lower end of the magazine the item may engage with the actuating member to cause a key blank to be ejected.

9. A dispensing system according to any of the preceding claims, in which the magazine has an internal profile to engage with the head and shank of a key blank to provide a correct alignment thereof.

10. A dispensing system according to claim 9, in which the internal profile of the magazine is adjustable to receive different sizes and shapes of key blanks.

11. A dispensing system according to any of the preceding claims, in which inserts are selectively mountable in the magazine to provide different sizes and/or shaped spaces for different key blanks.

12. A dispensing system according to any of the preceding claims, in which for use with cylinder key blanks, a space is provided in the magazine on one side only to receive the ears of key blanks to ensure correct alignment thereof.

13. A dispensing system according to any of the preceding claims, in which for use with lever key blanks, a space is provided on one side only to receive the blades of key blanks to ensure correct alignment of the key blanks.

14. A dispensing system according to any of the preceding claims, in which spaced sprung members are provided engageable on either side of a key blank shank as it is ejected from the magazine to provide a correct alignment of the key blank.

15. A dispensing system according to claim 14, in which the spaced sprung members are configured such that the blade of a key blank will pass thereover.
